Europäisches Patentamt

European Patent Office

Office européen des brevets

(11) Publication number: **0 423 597 A2**

# EUROPEAN PATENT APPLICATION

(21) Application number: 90119327.6

(51) Int. Cl.5: **G06F 9/45**

(22) Date of filing: 09.10.90

(30) Priority: 16.10.89 US 421866

(43) Date of publication of application:
24.04.91 Bulletin 91/17

(84) Designated Contracting States:
DE FR GB

(71) Applicant: **International Business Machines Corporation**
**Old Orchard Road**
**Armonk, N.Y. 10504(US)**

(72) Inventor: **Hopkins, Martin Edward**
**300 Douglas Road**
**Chappaqua, New York 10514(US)**
Inventor: **Markstein, Peter Willy**
**4202 North Hills Drive**
**Austin, Texas 78731(US)**
Inventor: **Markstein, Victoria Irene**
**4202 North Hills Drive**
**Austin, Texas 78731(US)**
Inventor: **O'Brien, John Kevin Patrick**
**Box 325, R.R. 3 Hoyt Street**
**South Salem, New York 10590(US)**
Inventor: **Shepherd, Arvin Douglas**
**Route 4, Box 189B**
**Peekshill, New York 10590(US)**

(74) Representative: **Blutke, Klaus, Dipl.-Ing. et al**
**IBM Deutschland GmbH Intellectual Property**
**Dept. Schönaicher Strasse 220**
**W-7030 Böblingen(DE)**

(54) Cross iteration common sub-expression elimination.

(57) The present invention removes common sub-expressions from successive iterations of a program loop. Operation of the present invention occurs in a series of steps as follows: First, the source program is compiled to produce intermediate code that exposes array address values. A sequence of address values which are used in a single iteration of a loop are identified. This sequence has the property that the values of a first subset of the member of the sequence, are used in the next iteration of the loop as values of a second, nonexclusive subset of members of the sequence. When this sequence has been identified, the intermediate program code is modified so that initial values for the sequence members in the second subset are computed before entry to the loop. Thereafter, each iteration computes only the values for the members of the first subset of the sequence. At the end of the loop, each member of the first subset is transferred to a temporary location used by its corresponding member of the second subset in the next iteration. According to a further aspect of the invention, the loop may be unrolled so that there is one copy of the loop for each member in the longest such sequence. Then, the storage locations may be cyclically permuted. By this method, the instructions to move members to the positions of their respective successors are unnecessary.

## CROSS ITERATION COMMON SUB-EXPRESSION ELIMINATION

This invention relates to computer program compilation, and specifically to the optimization of computer programs. In particular, a method is set forth for the elimination of common sub-expressions in successive iterations of a program loop.

After a computer program is written in a high-level language (i.e. Fortran, Pascal, Cobol), a compiler program is typically used to convert this program into a sequence of intermediate language instructions. These intermediate language instructions, in turn are converted into a sequence of machine language instructions (object code) to be executed by a computer. There are many ways in which a program, written in a high-level language, can be expressed in intermediate code. In particular, some intermediate language interpretations of high-level language programs, upon being reduced to the machine language level, will produce object code which executes in less time than object code produced from other intermediate language interpretations. For this reason, compiler systems are often equipped to perform a procedure called code optimization. Code optimization is a technique whereby intermediate code is improved to reduce the execution time of the program.

Code optimization can be achieved through numerous methods. Repetitious computations may be deleted. Variables that never change may be replaced with constants. Loops may be unrolled so that successive computations implied by the loop over several iterations appear sequentially in one iteration. An expression within a loop which is always evaluated identically regardless of loop iteration may be moved to a location outside of the loop.

A particular area of interest in the field of code optimization relates to decreasing the running time of program loops, i.e., sections of programs that repeat. Because computer programs spend a relatively large amount of time executing instructions in loops, a code optimization technique which decreases loop execution time can be extremely useful for improving the execution time of the entire computer program.

Another area of interest in the field of code optimization relates to the removal of common sub-expressions from a computer program. A common sub-expression is a computer operation which occurs more than once in a program, where the evaluation of each occurrence yields identical results. The removal of common sub-expressions from a computer program is a useful technique for optimization.

It is the object of the invention to provide a code optimizition method for a program containing sub-expressions.

These objects of the invention are accomplished by the features of the main claims. Further advantages of the invention are characterized in the subclaims.

The present invention operates by optimizing a computer program that contains common sub-expressions in successive iterations of a loop. Once optimized, the computer program can be executed in a shorter amount of time than before it was optimized. Operation of the present invention occurs in a series of steps as follow:

First, a sequence of values which are used in a single iteration of a loop are identified. This sequence has the property that the values of a first subset of the member of the sequence are used in the next iteration of the loop as values of a second, nonexclusive subset of members of the sequence. When this sequence has been identified, the intermediate program code is modified so that initial values for the sequence members in the second subset are computed before entry to the loop. Thereafter, each iteration computes only the values for the members of the first subset of the sequence. The values used for the members of the second subset are obtained from the values calculated during the previous iterations of the loop.

According to a further aspect of the invention, the loop may be unrolled so that there is one copy of the loop for each member in the longest such sequence. Then, temporary storage locations used to hold the values of the cross-iteration common subexpressions may be cyclically permuted among the copies of the loop.

Brief Description of the Drawings

Figures 1-6 are exemplary computer programs which are useful for describing the present invention.
Figures 7 and 8 are flow chart diagrams which are useful for explaining the operation of the present invention.

Detailed Description

2

The following are definitions of terms that are used in the description of the invention that follows.

COMMON SUB-EXPRESSION - an operation which is performed a plurality of times in a computer program producing identical results. For example, in the expressions $A := B + C + D$ and $E := B + C + F$, the operation $B + C$ may be referred to as a common sub-expression.

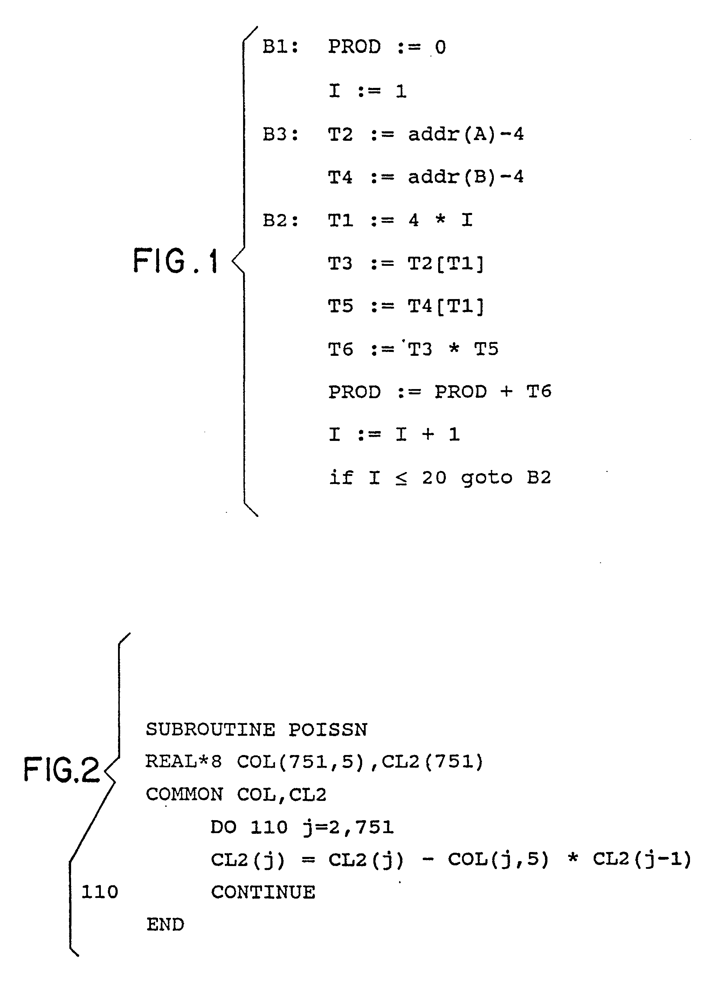

INDUCTION VARIABLE - A variable I within a loop L whose only assignments within loop L are either of the form $I := I + C$ or $I := I - C$ where C is a constant within loop L. For example, referring to Figure 1, the variable I is used to count from 1 to 10 in the loop. Thus the variable I is referred to as an induction variable.

CODE MOTION - a method of improving the running time of a computer program by decreasing the number of instructions in any of its loops. This may involve, for example, replacing code inside of a loop, which is evaluated identically on each iteration of the loop, by equivalent code which is executed before the loop is entered. Overall running time may be reduced even if the amount of code outside the loop is increased.

ADDRESSING SEQUENCE - a set of storage location values used in accessing a single array having the following attributes:

a) each storage location address depends on the same induction variable of a loop;

b) each storage location address differs from that of its predecessor by the value of the increment of the induction variable. UNROLLING - a method of rewriting a loop so that successive computations implied by the loop appear sequentially. For example:

```
DO I = 1 TO 100 BY 1
A(I) = A(I) + B(I)
END;
```

becomes, when unrolled by 2:

```
DO I = 1 TO 100 BY 2
A(I) = A(I) + B(I);
A(I + 1) = A(I + 1) + B(I + 1);
END
```

Loop unrolling avoids a test at every iteration by recognizing that the number of iterations is constant. Thus, loop unrolling allows a reduction in the number of instructions that are executed. In the preceding example the number of increments and tests for loop control is halved. Loop unrolling also exposes more instructions for parallel execution. The two statements in the unrolled form of the preceding example can be executed at the same time since they are independent.

RECURRENCE EXPRESSION - an expression which is found in a loop and in which the value computed on one iteration depends on a value computed on an earlier iteration.

In a program containing a recurrence expression, it may be desirable to save the value of the expression for a successive iteration of the loop.

Figure 2 illustrates source code for a program which contains a recurrence expression. The value of CL2(J) in a given iteration of the loop is used in a successive iteration of the loop as CL2(J-1). Thus, it is desirable for the compiler to recognize this fact and to preserve the value of CL2(J) in a temporary register across successive loop iterations.

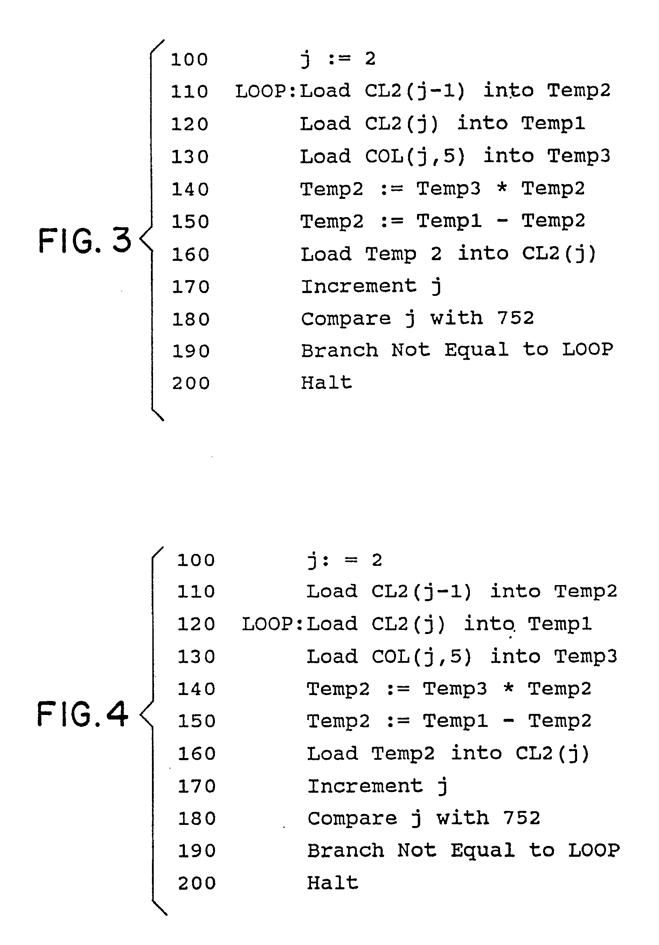

Figures 3 and 4 show intermediate code interpretations of the program shown in Figure 2. In the intermediate code, shown in Figure 3, the recurrence expression has been recognized and provisions have been made for the value generated by this recurrence to be temporarily saved for a successive iteration. In the interpretation shown in Figure 4, the recurrence has not been recognized. In Figure 4, CL2(J-1) is loaded into Temp 2 at step 110. This load instruction is executed on each iteration of LOOP. In Figure 3 the value of CL2(J-1) is also loaded into Temp 2 at step 110. However, in Figure 3, LOOP begins at step 120. This makes it unnecessary to load CL2(J-1) into Temp 2 on each iteration of LOOP. Because CL2(J) is placed into Temp 2 at step 150, upon a successive iteration of LOOP, Temp 2 is regarded as containing CL2(J-1). It is worthwhile to note that LOOP in Figure 3 consists of eight (8) instructions while LOOP in Figure 4 consists of nine (9) instructions. Thus the identification of the recurrence expression has resulted in a savings of one (1) instruction per loop iteration, or 750 instructions over the execution of the program.

In addition to true recurrence expressions, sequences of values are often used in a single iteration of a loop such that some members of the sequence are used again in the next iteration as the values of other members of the sequence. These values may be considered to form a set of common sub-expressions across successive loop iterations. Such sequences may be optimized by a technique called Predictive Commoning. This technique is also known as Cross Iterative Common Sub-expression Elimination.

For example, consider a program loop in which all members of a sequence of values, except the first, are used in the next iteration of the loop as respectively different members of the sequence. Before entry to the loop, all but the first member of the sequence are computed. Thereafter, each iteration must compute only the first member of the sequence. At the end of the loop, each member is moved to the register in which its successor is to be found during the next iteration. The loop may be unrolled so that there is one copy of the loop code for each member in the longest such sequence. The instructions to move members to their successor's position may then be eliminated by cyclically permuting the set of registers which are used to hold the sequence of values.

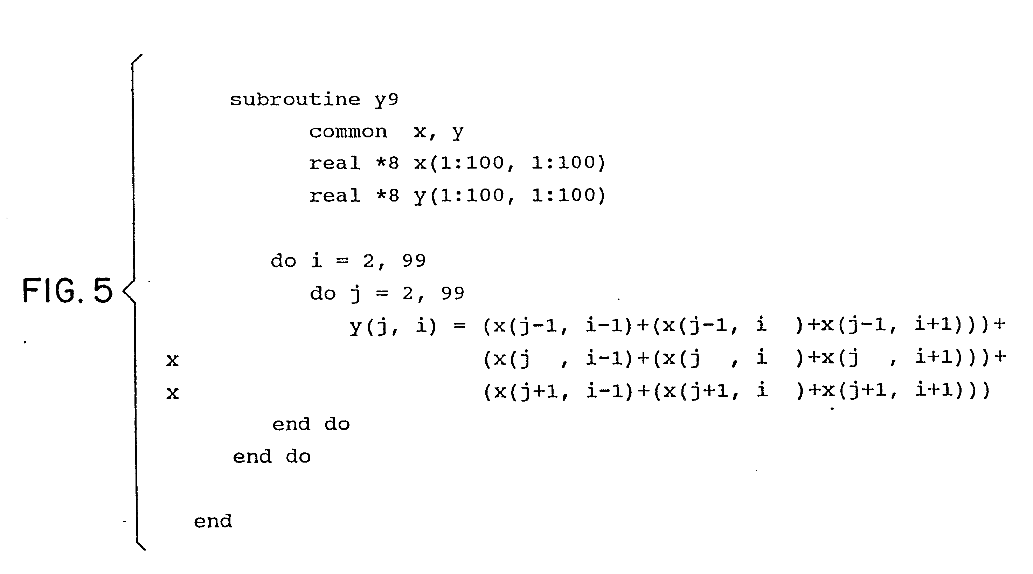

In Figure 5 the source code for a program containing several recurrence expressions is shown. This program contains sequences X(J + 1,K), X(J,K), X(J-1,K) where K takes the values i-1, i, and i + 1. In addition the sum (1)

$$\sum_{K=i-1}^{i+1} X(J+1,K) \qquad\qquad (1)$$

forms a sequence with the corresponding sums for J and J-1.

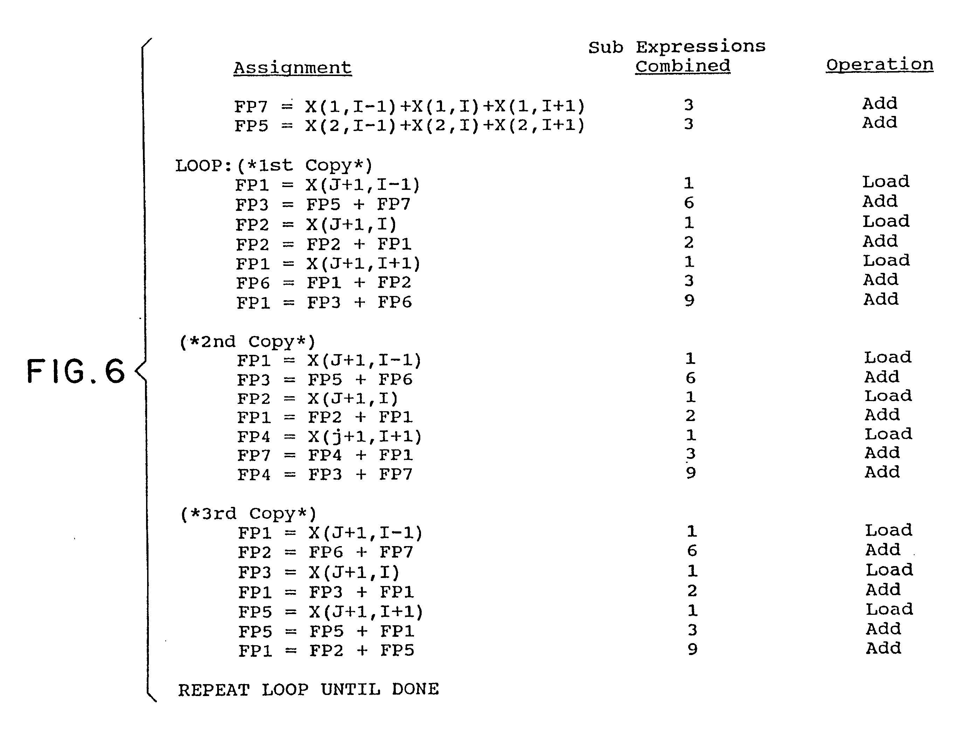

Figure 6 illustrates an intermediate code representation for the program shown in Figure 5. This intermediate code representation shows the effects of the present invention. In Figure 6, the original loop has been duplicated to form three copies. Data from a first and second set of addressed memory locations are added together and loaded into FP7 and FP5 prior to entering the first loop. Thus, the program does only three load operations (loads) and four addition operations (adds) per original iteration, rather than the normal nine loads and eight adds. Since the results of the adds performed during any iteration carry all the data required for the next iteration, the loaded quantities are not preserved. Floating point registers FP5, FP6 and FP7 are cyclically permuted and contain the result X(J + 1,I-1) + X(J + 1,I) + X(J + 1,I + 1) computed on particular iterations of the inner loop.

In describing the algorithm used in achieving this optimization, it may be helpful to define several terms:
depends_on(x) - transitive closure of expressions having x as an input.
kill(v) - where a set of computations exist which depend on the value of a storage location associated with a variable v, the members of this set are said to be killed by an instruction which may modify the storage locations associated with v. The effect of kill(v), in the prior art, is to end a variable's use as a common sub-expression.
dont_kill(x,i) - the subset for a member of a sequence, x, of depends_on(x) which is known to be unaffected by a particular killing instruction, i, within a particular loop.
For a killing instruction dont_kill(r) =

$$\{ \bigcup_{q \in S, q \neq r} (\{q\} \cup \text{depends\_on}_q) \cap \neg \text{depends\_on}_r \}$$

where S is a sequence, q are the sequence members which is not killed and r are the sequence members unaffected by a killing instruction.
may_follow(x) - the set of computations for any computation x, which would result if all members of sequences on which x depends are replaced by their respective successors within the sequence in the computer program. If x depends on any loop varying quantity other than sequence members and quantities constructed from sequence members and invariants, then may_follow(x) is defined to be null.
available - the set of operations, at a particular point in a program, which have previously been completed, and have not been killed.
reincarnate - the set of computations which are being used in one iteration and can be reused in a successive iteration.

$$\text{reincarnate} = \{ \bigcup_{C \in \text{Sequences}, q \in C, q \neq \text{last}_C} \text{depends\_on}_q \cap \text{may\_follow}(\text{pred}_q) \} \cap \text{avail}$$

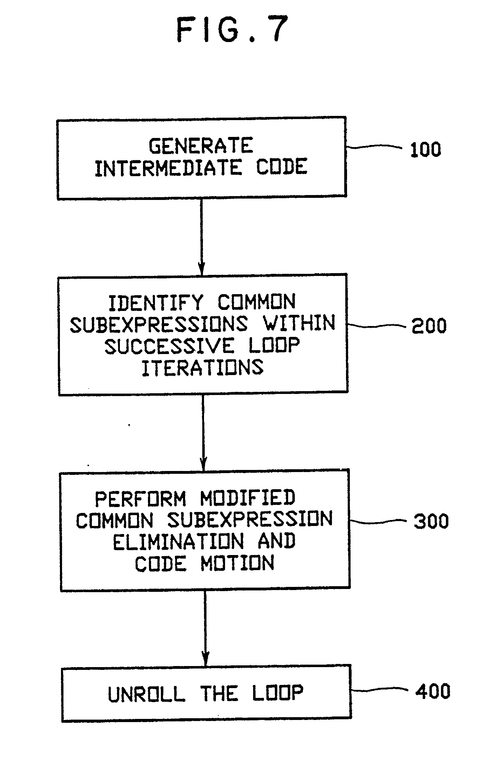

Operation of the present invention is summarized in Figure 7. At step 100, the source program is compiled to produce an intermediate code representation suitable for the present invention. This representation desirably enables the identification of address computations which are used to access array elements in the main storage of the computer (e.g. load operations using base and index registers). This representation also allows for the determination of the loop induction variables on which these address computations are dependent.

At step 200, the pattern of storage references for each induction variable is analyzed. This is done by looking at all of the memory operations (i.e. loads and stores) in the inner loops of a program. In particular, a search is performed for two memory accesses which are based on the same induction variable and which differ by some specific increment. These memory accesses are said to form an address sequence of length two. All address sequences of length two are located, and if possible, are strung together to form longer sequences.

At step 300 a modified form of code motion and common sub-expression elimination occurs. An exemplary technique is shown in Aho et al. Principles of Compiler Design , Addison Wesley, 1979, pp 454-466, which is hereby incorporated by reference. In performing code motion optimization, any commonly known technique may be used. It is also noted that any method of common sub-expression elimination may be used. In an exemplary implementation of the disclosed invention, the Cocke and Schwartz algorithm is used. See Cocke, J. "Global common sub-expression elimination" SIGPLAN notices 5:7, pages 20 through 24, 1970 which is hereby incorporated by reference.

Typically, common sub-expression elimination entails the removal of all but one evaluation of a common sub-expression from a single loop.

The removed evaluations are replaced by references to a locally stored value. This value represents the one retained common sub-expression evaluation. Such as value may be stored, for example, in a temporary register. For purposes of this invention, common sub-expression elimination is modified to optimize common sub-expressions across successive loop iterations. This allows a value, which has been accessed in a current loop iteration, to be temporarily saved for a future loop iterations. Thus, duplicative memory accesses and computational steps are avoided.

The present embodiment of the invention is concerned with situations in which data values are stored in an array that is addressed by a sequence of recurrence expressions, such as may be identified in step 200. In conventional common sub-expression elimination, quantities from this array may be assigned to temporary registers during each loop iteration to reduce the number of read operations which would occur if the indexed array value were fetched at each occurrence. By these algorithms, quantities from this array which are common across loop iterations are typically killed at the end of each iteration, when the temporary register values are written (i.e. stored) into their corresponding array locations. In the modification disclosed, these kill operations do not take place.

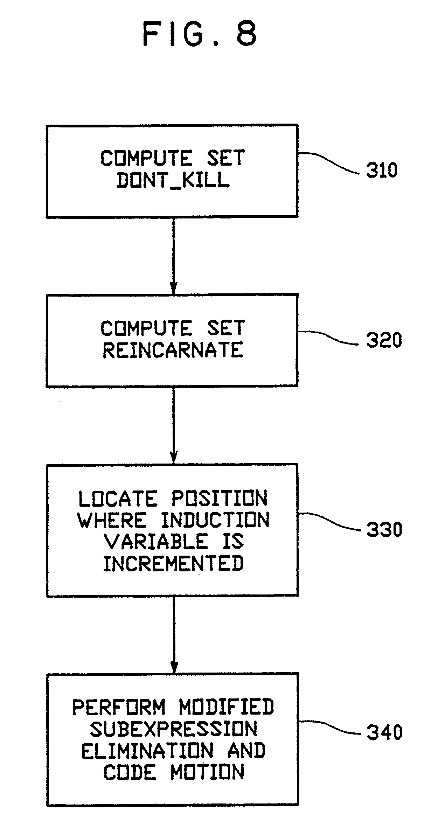

Figure 8 is a detailed flow chart which describes the step 300 of Fig. 7. In Fig. 8, at step 310 membership in the set dont_kill is determined for each such memory write operation, according to the definition given earlier. Each recurrence expression is a member of the set dont_kill. Accordingly, the registers occupied by these expressions are not killed by the store. Next, at step 320 the set reincarnate is computed for each sequence. This set relates the values that are not killed in one iteration of a loop to their corresponding values in a subsequent iteration of the loop. At step 330. the location within the program of the increment of the induction variable associated with each sequence is located.

At step 340, the modified commoning and code motion operations are performed. These operations behave as if all members of the set reincarnate were computed after the location within the program which was established at step 330. Since no instructions are added to move these values to different registers, it is desirable to unroll the loop code and permute the registers used to hold the values of the recurrence expressions.(Figure 7, step 400).

In step 400 of Figure 7 the loop is unrolled so that the number of copies of the original body is equal to the number of members in the longest sequence of recurrence expressions which has been found. In unrolling the loop, any method of loop unrolling may be used. An exemplary method is described in a portion of a textbook by Aho et al., Principles of Compiler Design , Addison Wesley, 1979, pp 471-473, which is hereby incorporated by reference.

As the loop is unrolled, the names of computations (i.e. the registers identified with the respective computations) in each sequence are permuted. This allows a computation (e.g. the value of a particular array element) to be placed into one register in one iteration and to be used in the next iteration as a different computation (e.g. the value of the same array element which is used in a different part of the code during the next iteration). Using this type of permutation, the step of copying the values of recurrence expressions from one loop iteration to the next may be eliminated.

If the loop is unrolled into a plurality of loops, whose number is not an integral factor of the number of original iterations, then a residual loop is created to make up for the remaining iterations. In this residual loop, instructions are added to the residual loop which copy the reincarnate set into different temporary registers for the following loop iteration.

**Claims**

1. A method for eliminating a common sub-expression across iterations of a loop of a computer program, wherein said common sub-expression depends on an induction variable, said method comprising the steps of:
   a) identifying said common sub-expression;
   b) modifying said computer program to preserve an evaluation of the common sub-expression across an iteration of the loop; and
   c) modifying said program to utilize the preserved evaluation of the common sub-expression across an iteration of the loop.

2. The method of claim 1, wherein step b) includes the step of defining a don't kill set for the common sub-expression, wherein the don't kill set includes a plurality of address computations having a common induction variable, wherein said address computations are unaffected by a kill instruction.

3. The method of claim 1, wherein step c) includes the step of determining the set reincarnate for the common sub-expression at a point after the induction variable has been incremented.

4. The method of claim 3, wherein a set of common sub-expressions is identified, the common sub-expressions in said set being dependent on a common induction variable and corresponding to respectively different storage locations of an array, said locations being separated by an increment defined by said induction variable, said method further comprising the step of:
   d) unrolling the loop to generate a number of copies of the loop equal to the number of members in the set common sub-expressions

5. The method of claim 4, wherein step (d) includes the additional step of permuting computations as the loop is unrolled.

6. The method of claim 1, wherein step a) is preceded by the step of converting the program to a form which facilitates the identification operation of step a).

7. A method of eliminating redundant computations from a succeeding iteration of a loop said method comprising the steps of
   a) identifying the redundant computations;
   b) deleting the computations; and
   c) inserting an instruction which performs the computation and places the result in a location from which it will be accessed on the succeeding iteration.

8. The method of claim 7 wherein step a) is proceeded by the step of code motion.

```
          B1:   PROD := 0

                I  := 1

          B3:   T2  := addr(A)-4

                T4  := addr(B)-4

          B2:   T1  := 4 * I

                T3  := T2[T1]

                T5  := T4[T1]

                T6  := T3 * T5

                PROD := PROD + T6

                I  := I + 1

                if I ≤ 20 goto B2
```

FIG.1

```
     SUBROUTINE POISSN
     REAL*8 COL(751,5),CL2(751)
     COMMON COL,CL2
          DO 110 j=2,751
          CL2(j) = CL2(j) - COL(j,5) * CL2(j-1)
110       CONTINUE
     END
```

FIG.2

7

**FIG. 3**

```
100              j := 2
110    LOOP:Load CL2(j-1) into Temp2
120         Load CL2(j) into Temp1
130         Load COL(j,5) into Temp3
140         Temp2 := Temp3 * Temp2
150         Temp2 := Temp1 - Temp2
160         Load Temp 2 into CL2(j)
170         Increment j
180         Compare j with 752
190         Branch Not Equal to LOOP
200         Halt
```

**FIG.4**

```
100              j: = 2
110         Load CL2(j-1) into Temp2
120    LOOP:Load CL2(j) into Temp1
130         Load COL(j,5) into Temp3
140         Temp2 := Temp3 * Temp2
150         Temp2 := Temp1 - Temp2
160         Load Temp2 into CL2(j)
170         Increment j
180         Compare j with 752
190         Branch Not Equal to LOOP
200         Halt
```

FIG. 5

```
subroutine y9
    common  x, y
    real *8 x(1:100, 1:100)
    real *8 y(1:100, 1:100)


  do i = 2, 99
    do j = 2, 99
      y(j, i) = (x(j-1, i-1)+(x(j-1, i  )+x(j-1, i+1)))+
x               (x(j  , i-1)+(x(j  , i  )+x(j  , i+1)))+
x               (x(j+1, i-1)+(x(j+1, i  )+x(j+1, i+1)))
    end do
  end do

end
```

| Assignment | Sub Expressions Combined | Operation |
|---|---|---|
| FP7 = X(1,I-1)+X(1,I)+X(1,I+1) | 3 | Add |
| FP5 = X(2,I-1)+X(2,I)+X(2,I+1) | 3 | Add |
| | | |
| LOOP:(*1st Copy*) | | |
| FP1 = X(J+1,I-1) | 1 | Load |
| FP3 = FP5 + FP7 | 6 | Add |
| FP2 = X(J+1,I) | 1 | Load |
| FP2 = FP2 + FP1 | 2 | Add |
| FP1 = X(J+1,I+1) | 1 | Load |
| FP6 = FP1 + FP2 | 3 | Add |
| FP1 = FP3 + FP6 | 9 | Add |
| | | |
| (*2nd Copy*) | | |
| FP1 = X(J+1,I-1) | 1 | Load |
| FP3 = FP5 + FP6 | 6 | Add |
| FP2 = X(J+1,I) | 1 | Load |
| FP1 = FP2 + FP1 | 2 | Add |
| FP4 = X(j+1,I+1) | 1 | Load |
| FP7 = FP4 + FP1 | 3 | Add |
| FP4 = FP3 + FP7 | 9 | Add |
| | | |
| (*3rd Copy*) | | |
| FP1 = X(J+1,I-1) | 1 | Load |
| FP2 = FP6 + FP7 | 6 | Add |
| FP3 = X(J+1,I) | 1 | Load |
| FP1 = FP3 + FP1 | 2 | Add |
| FP5 = X(J+1,I+1) | 1 | Load |
| FP5 = FP5 + FP1 | 3 | Add |
| FP1 = FP2 + FP5 | 9 | Add |
| | | |
| REPEAT LOOP UNTIL DONE | | |

FIG.6

# FIG.7

```
┌─────────────────────────────┐
│         GENERATE            │──── 100
│   INTERMEDIATE CODE         │
└─────────────────────────────┘
              │
              ▼
┌─────────────────────────────┐
│     IDENTIFY COMMON         │
│  SUBEXPRESSIONS WITHIN      │──── 200
│      SUCCESSIVE LOOP        │
│        ITERATIONS           │
└─────────────────────────────┘
              │
              ▼
┌─────────────────────────────┐
│    PERFORM MODIFIED         │
│  COMMON SUBEXPRESSION       │──── 300
│    ELIMINATION AND          │
│      CODE MOTION            │
└─────────────────────────────┘
              │
              ▼
┌─────────────────────────────┐
│     UNROLL THE LOOP         │──── 400
└─────────────────────────────┘
```

EP 0 423 597 A2

# FIG. 8

COMPUTE SET
DONT_KILL — 310

COMPUTE SET
REINCARNATE — 320

LOCATE POSITION
WHERE INDUCTION
VARIABLE IS
INCREMENTED — 330

PERFORM MODIFIED
SUBEXPRESSION
ELIMINATION AND
CODE MOTION — 340

12